# EUROPEAN PATENT SPECIFICATION

(11) **EP 3 929 670 B1**
(45) Date of publication and mention of the grant of the patent: **14.10.2026**
(21) Application number: 19918711.3
(22) Date of filing: 28.03.2019
(51) Int. Cl.: G05B 15/02

(54) **METHOD AND APPARATUS FOR BROADCASTING THE STATE OF A HOUSEHOLD APPLIANCE**
VERFAHREN UND VORRICHTUNG ZUR ÜBERTRAGUNG DES ZUSTANDS EINES HAUSHALTSGERÄTS
PROCÉDÉ ET DISPOSITIF DE TRANSMISSION DE L'ÉTAT D'UN APPAREIL ÉLECTROMÉNAGER

(30) Priority: 11.03.2019 CN 201910181775
(43) Date of publication of application: 29.12.2021
(73) Proprietor: GD Midea Air-Conditioning Equipment Co., Ltd., Foshan, Guangdong 528311 (CN); Midea Group Co., Ltd., Foshan, Guangdong 528311 (CN)
(72) Inventor: OUYANG, Min, Foshan, Guangdong 528311 (CN)
(74) Representative: RGTH
(86) International application number: PCT/CN2019/080037
(87) International publication number: WO 2020/181588

(56) References cited:
- WO-A1-2018/163022
- CN-A- 104 007 729
- CN-A- 105 068 434
- CN-A- 106 502 119
- CN-A- 107 479 396
- CN-A- 107 561 945
- CN-A- 108 508 317
- CN-A- 108 572 555
- CN-A- 108 650 155
- US-A1- 2013 278 384
- US-A1- 2016 378 082

## Description

### FIELD

The present invention relates to the field of household appliances technology, and particularly to a method and apparatus for broadcasting a status of a household appliance, and a device.

### BACKGROUD

In home life, users often need to actively check whether some appliances have triggered a certain status that needs to be handled manually, such as the lack of water in a humidifier, the completion of rice cooking in a rice cooker and the completion of clothes washing in a washing machine.

US 2013/278384 A1 discloses a management system with an apparatus that communicates with, either directly or indirectly, one or more household appliances, wherein the household appliances can communicate a variety of information to the apparatus. The household appliances convey information to the apparatus in the form of a first output that the apparatus can receive and, in response, generate a second output that is sent to one or more computing devices.

CN 104 007 729 A discloses a control method of a home appliance comprising: when the home appliance receives a control command, execute the control command, and send the execution result information to the broadcast device; the broadcast device performs voice broadcast on the execution result information.

WO 2018/163022 A1 discloses a system for monitoring an appliance (e.g. washing machine) via another device (e.g. cooker hood). If the user uses a washing machine to wash clothes at a balcony and needs to go to the kitchen to cook when the washing machine is still in an operating state, the user can instruct the washing machine to send the state information of ending an operation to the cooker hood when the washing machine completes washing. Further, the cooker hood further includes a reminding component responding to the state information actively sent by the to-be-controlled device.

D4 discloses a method for controlling a home appliance, wherein, if the home appliance does not receive a control command, the home appliance transmits the state information of the home appliance to the user terminal bound to itself, so that the user terminal reminds the user to control the home appliance, thereby avoiding the user waste of electricity and inefficiency caused by long-term forgetting.

CN 105 068 434 A discloses a method for controlling multiple household applications by establishing a wireless connection with a plurality of home appliances; acquiring operating parameters of each of the plurality of home appliances; determining whether the operating parameter of each household appliance meets a preset alarm condition; when the running parameter of the at least one home appliance meets the preset alarm condition, a reminder message is sent to a display device preset in the plurality of home appliances.

It is the object of the present invention to provide an improved method and system for broadcasting a status of a household appliance.
This object is achieved by the subject-matter of the independent claims.

Preferred embodiments of the invention are defined by the dependent claims.
Any "embodiment" referred in the description, which is not covered by the claims, is for illustrative purpose only.

### SUMMARY

The present invention aims to solve at least one of the technical problems in the related art to a certain extent.

For this, in an aspect, the present invention provides a method for broadcasting a status of a household appliance, which achieves broadcasting the status of the household appliance by an appliance such as an air conditioner, and allows a user to be able to know a status of a household appliance and to handle it in time, and thus improving the user experience and solving a problem that some statuses cannot be handled timely caused by forgetting or ignoring an operating status of the house appliance, when the user is busy with other things, such as doing a lot of housework or resting in the living room.

This method is defined by independent claim 1. Preferred embodiments of the method are defined in dependent claims 2 and 3.

In another embodiment, the present invention provides an apparatus for broadcasting a status of a household appliance.

This device is defined by independent claim 4. Preferred embodiments are defined in dependent claim 5 and 6.

In another embodiment, defined by independent claim 7, the present invention provides a household appliance capable of broadcasting the status of a second household appliance.

In still another embodiment, defined by claim 8, the present invention provides a computer-readable storage medium.

In a first embodiment, the present invention provides a method for broadcasting a status of a household appliance, wherein the method is applied to a target household appliance, and the method includes:
receiving a status broadcast instruction, wherein the status broadcast instruction is generated according to a broadcast configuration information that is preset and a status change information of the household appliance; and
broadcasting a corresponding status of the household appliance according to the status broadcast instruction.

According to the method for broadcasting a status of a household appliance in embodiments of the present invention, a target household appliance receives a status broadcast instruction, where the status broadcast instruction is generated according to a broadcast configuration information that is preset and a status change information of the household appliance; and broadcasts a corresponding status of the household appliance according to the status broadcast instruction, thus achieving broadcasting the status of the household appliance by an appliance such as an air conditioner to inform the user to handle it timely, thereby increasing intelligent level of the household appliance, extending the product function, and improving the user experience. Moreover, broadcasting a status of the household appliance is realized via a local area network and a server simultaneously, and thus ensuring reliability of broadcasting the status of the household appliance by redundancy computation.

In addition, the method for broadcasting a status of a household appliance provided according to the above embodiments of the present invention further includes the following additional technical features.

Receiving a status broadcast instruction includes: receiving the status broadcast instruction transmitted by a server.

Receiving a status broadcast instruction includes: receiving the status change information transmitted by the household appliance via a local area network; and judging whether the status change information meets a broadcast condition that is preset according to the broadcast configuration information that is pre-stored, and generating a corresponding status broadcast instruction if the broadcast condition is met.

The method further includes: receiving the broadcast configuration information transmitted by the server; and storing the broadcast configuration information in a communication module, and/or storing the broadcast configuration information in an electronic control module.

Optionally, the broadcast configuration information includes an appliance identifier, status information corresponding to the appliance identifier, and a broadcast time, wherein judging whether the status change information meets a broadcast condition that is preset according to the broadcast configuration information that is pre-stored and generating a corresponding status broadcast instruction if the broadcast condition is met include: judging whether an appliance identifier of the household appliance matches the appliance identifier in the broadcast configuration information; if yes, judging whether the status change information matches the status information in the broadcast configuration information; if yes, judging whether a current time meets the broadcast time; and if yes, generating the corresponding status broadcast instruction.

Optionally, after broadcasting a corresponding status of the household appliance according to the status broadcast instruction, the method further includes: setting a target bit of a state machine to a suspended state according to the status broadcast instruction.

Optionally, after setting a target bit of a state machine to a suspended state, the method further includes: judging whether the status broadcast instruction currently acquired corresponds to the target bit, if yes, not broadcasting the corresponding status of the household appliance.

Optionally, after setting a target bit of a state machine to a suspended state, the method further includes: receiving a reset instruction for the target bit of the state machine, and controlling the target bit to reset.

**In** a further example another method for broadcasting a status of a household appliance is provided, wherein the method is applied to a server, the method includes:
acquiring status change information transmitted by the household appliance;
judging whether the status change information meets a broadcast condition that is preset according to the broadcast configuration information that is pre-stored, and generating a corresponding status broadcast instruction if the broadcast condition is met; and
controlling a target household appliance to broadcast a corresponding status of the household appliance according to the status broadcast instruction.

According to the method for broadcasting a status of a household appliance in embodiments of the present invention, the server acquires status change information transmitted by the household appliance, then judges whether the status change information meets a broadcast condition that is preset according to the broadcast configuration information that is pre-stored, and generates a corresponding status broadcast instruction if the broadcast condition is met, and further controls a target household appliance to broadcast a corresponding status of the household appliance according to the status broadcast instruction, thus achieving that the server controls an appliance, such as an air conditioner, to broadcast the status of the household appliance, and thus informing the user to handle it timely, thereby increasing intelligent level of the household appliance, extending the product function, and improving the user experience. **In** addition, broadcast control information of the target household appliance adopts protocol data, and the accessible device has a good expansibility.

In addition, the method for broadcasting a status of a household appliance provided according to the above embodiments of the present invention may further include the following additional technical features.

Optionally, the method further includes: acquiring status information transmitted by the household appliance, wherein the status information is transmitted by the household appliance at a preset time, and/or when a status of the household appliance is changed; and judging whether the status is changed according to the status information, if yes, generating the corresponding status broadcast instruction.

Optionally, controlling a target household appliance to broadcast a corresponding status of the household appliance according to the status broadcast instruction includes: determining a target household appliance identifier of the target household appliance; and transmitting the status broadcast instruction to the target household appliance according to the target household appliance identifier, so as to allow the target household appliance to broadcast the corresponding status of the household appliance according to the status broadcast instruction.

Optionally, the method further includes: receiving and storing the broadcast configuration information transmitted by a control device; converting the broadcast configuration information to be in a protocol data type and transmitting to the target household appliance, so as to allow the target household appliance to store the broadcast configuration information in the protocol data type.

Optionally, the broadcast configuration information includes an appliance identifier, status information corresponding to the appliance identifier, and a broadcast time, wherein judging whether the status change information meets a broadcast condition that is preset according to the broadcast configuration information that is pre-stored and generating a corresponding status broadcast instruction if the broadcast condition is met include: judging whether an appliance identifier of the household appliance matches the appliance identifier in the broadcast configuration information; if yes, judging whether the status change information matches the status information in the broadcast configuration information; if yes, judging whether a current time meets the broadcast time; and if yes, generating the corresponding status broadcast instruction.

In another embodiment, the present invention provides an apparatus for broadcasting a status of a household appliance, including:
an acquisition module, configured to receive a status broadcast instruction, wherein the status broadcast instruction is generated according to a broadcast configuration information that is preset and a status change information of the household appliance;
a broadcast module, configured to broadcast a corresponding status of the household appliance according to the status broadcast instruction.

In a further example, another apparatus for broadcasting a status of a household appliance is described, including:
a reception module, configured to acquire status change information transmitted by the household appliance;
a generation module, configured to judge whether the status change information meets a broadcast condition that is preset according to the broadcast configuration information that is pre-stored, and generate a corresponding status broadcast instruction if the broadcast condition is met; and
a control module, configured to control a target household appliance to broadcast a corresponding status of the household appliance according to the status broadcast instruction.

In a further embodiment, the present invention provides an air conditioner appliance, including: an appliance body; and an apparatus for broadcasting a status of a household appliance as described in the embodiments of the third aspect.

In another embodiment, the present invention provides a computer device, including: a memory; and a processor, wherein the processor executes, by reading an executable program code stored in the memory, a program corresponding to the executable program code, to implement a method for broadcasting a status of a household appliance as described in the above embodiments.

In a further embodiment, the present invention provides a computer-readable storage medium having stored therein a computer program that, when executed by a processor, implements a method for broadcasting a status of a household appliance as described in the above embodiments.

The additional aspects and advantages of the present invention will be provided and become apparent in the following description, or would be understood through the practice of the present disclosure.

### BRIEF DESCRIPTION OF THE DRAWINGS

Figure 1 is a flow chart showing a method for broadcasting a status of a household appliance provided in embodiments of the present invention;
Figure 2 is a flow chart showing another method for broadcasting a status of a household appliance provided in embodiments of the present invention;
Figure 3 is a diagram showing an application scenario provided in embodiments of the present invention;
Figure 4 is a block diagram showing an apparatus for broadcasting a status of a household appliance provided in examples of the present invention;
Figure 5 is a block diagram showing another apparatus for broadcasting a status of a household appliance provided in embodiments of the present invention.

### DETAILED DESCRIPTION

Reference will be made in detail to embodiments of the present invention. The same or similar elements and the elements having same or similar functions are denoted by like reference numerals throughout the descriptions. The embodiments described herein with reference to drawings are explanatory, illustrative, and used to generally understand the present invention. The embodiments shall not be construed to limit the present invention, which is defined by the appended claims.

The method and the apparatus for broadcasting a status of a household appliance and a device in embodiments of the present invention are described below with reference to the drawings.

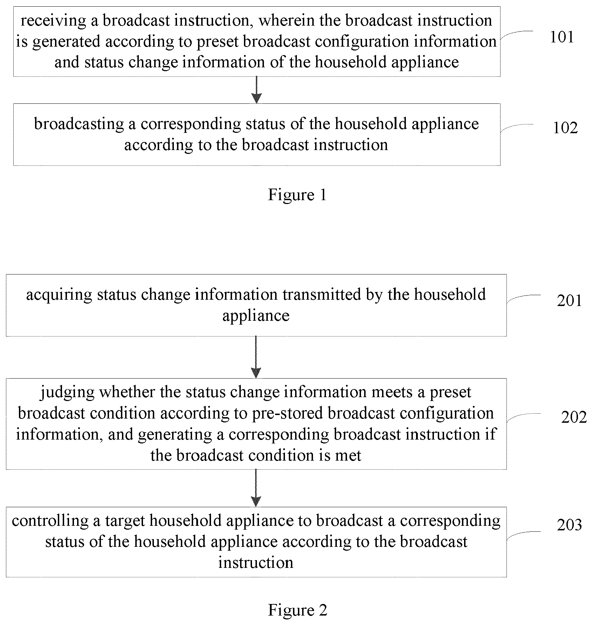

Figure 1 is a flow chart showing a method for broadcasting a status of a household appliance provided in embodiments of the present invention. As shown in Figure 1, the method includes: steps 101 and 102.

At step 101, a status broadcast instruction is received, where the status broadcast instruction is generated according to a broadcast configuration information that is preset and a status change information of the household appliance.

The method for broadcasting a status of a household appliance in embodiments of the present invention may be applied to a target household appliance. The target household appliance may be a household appliance with a voice broadcast function, for example, may be an air conditioner, a refrigerator, a smoke stove and other household appliances with the voice broadcast function.

In embodiments of the present invention, the target household appliance may acquire the status broadcast instruction generated according to the broadcast configuration information and the status change information of the household appliance, and then broadcast the corresponding status of the household appliance according to the status broadcast instruction. As an example, the status broadcast instruction may be JavaScript Object Notation (Json) data.

In an embodiment of the present invention, the target household appliance may receive and store the broadcast configuration information transmitted by a server, for example, the broadcast configuration information may be stored in a communication module such as a WIreless-Fidelity (wifi) module. For another example, the broadcast configuration information may be stored in an electronic control module.

The broadcast configuration information may include an appliance identifier and status information, and may further include a broadcast time, broadcast volume, etc., which are not specifically restricted here.

In embodiments of the present invention, the target household appliance may form a local area network with other household appliances via the communication module such as the wifi module. When the status of the household appliance is changed, the household appliance transmits the status change information via the local area network. For example, the household appliance may transmit the status change information to a preset target household appliance via the local area network. For another example, the household appliance may broadcast the status change information via the local area network. The target household appliance receives the status change information, and judges whether the status change information meets a broadcast condition that is preset according to the broadcast configuration information that is pre-stored, and generates a corresponding status broadcast instruction if the broadcast condition is met.

As an example, taking the broadcast configuration information including the appliance identifier, the status information and the broadcast time as an example, the target household appliance may acquire the appliance identifier of the household appliance corresponding to the status change information, and judge whether an appliance identifier of the household appliance matches the appliance identifier in the configuration information; if yes, judge whether the status change information matches the status information in the configuration information; if no, do not generate the status broadcast instruction; if yes, judge whether a current time meets the broadcast time; if no, do not generate the status broadcast instruction; if yes, generate the corresponding status broadcast instruction; if no, do not generate the status broadcast instruction.

In an embodiment of the present invention, the status broadcast instruction may be transmitted to the target household appliance by the server, and the target household appliance receives the status broadcast instruction and broadcasts the corresponding status of the household appliance. The status broadcast instruction may be generated by the server according to the received status change information of the household appliance, and the broadcast configuration information pre-stored in the server. It should be noted that, the implementation of generating the status broadcast instruction according to the broadcast configuration information and the status change information in the above embodiment, is also applicable to the server in this embodiment of the present invention, and will not be repeated here.

Therefore, broadcasting a status of the household appliance can be realized via a local area network and a server simultaneously, and thus ensuring reliability of broadcasting the status of the household appliance by redundancy computation.

At step 102, the corresponding status of the household appliance is broadcasted according to the status broadcast instruction.

In embodiments of the present invention, after receiving the status broadcast instruction, the target household appliance may broadcast the corresponding status of the household appliance according to the status broadcast instruction. For example, take an air conditioner with a broadcast function as an example, when a status of a humidifier is changed to water lacking, the air conditioner may acquire the broadcast instruction corresponding to the lack of water in the humidifier, and broadcast the water lacking status of the humidifier according to the status broadcast instruction to remind a user to add water to the humidifier in time, and thus achieving broadcasting the status of the household appliance by an appliance such as an air conditioner, to inform the user to handle it timely, thereby extending the product function and improving the user experience.
In an embodiment of the present invention, after broadcasting the corresponding status of the household appliance according to the status broadcast instruction, the target household appliance may further set a corresponding target bit of a state machine to a suspended state according to the status broadcast instruction. The state machine is a set of data that records the behavior state, and the target bit corresponds to the status broadcast instruction. For example, a target bit A corresponds to the broadcast instruction that the humidifier lacks water, and a target bit B corresponds to the broadcast instruction that a washing machine finishes clothes washing.

Further, after setting the target bit of the state machine to the suspended state, the target household appliance may further judge whether the status broadcast instruction currently acquired corresponds to the target bit, if yes, do not broadcast the corresponding status of the household appliance. Specifically, when receiving the status broadcast instruction, the target household appliance judges whether the target bit corresponding to the status broadcast instruction is in the suspended state, and does not broadcast the corresponding status of the household appliance when the target bit is in the suspended state, thereby avoiding repeatedly broadcasting of the status broadcast instruction for a same status change.

Optionally, after setting the target bit of the state machine to the suspended state, the target household appliance may further receive a reset instruction for the target bit of the state machine, and control the target bit to reset. As an example, the target household appliance broadcasts the status that the humidifier lacks water, the user adds water to the humidifier according to broadcast content, then the humidifier transmits corresponding status change information after being added with water, further a corresponding reset instruction is generated according to the status change information; and the target household appliance resets a corresponding target bit according to the reset instruction, and thus broadcasting the corresponding status of the household appliance when receiving the status broadcast instruction corresponding to the target bit again.

It should be noted that, the foregoing explanation on the data link transmission process of the status broadcast instruction is also applicable to the reset instruction, and will not be repeated here.

According to the method for broadcasting a status of a household appliance in embodiments of the present invention, a target household appliance receives a status broadcast instruction, where the status broadcast instruction is generated according to a broadcast configuration information that is preset and a status change information of the household appliance; then broadcasts a corresponding status of the household appliance according to the status broadcast instruction, thus achieving broadcasting the status of the household appliance by an appliance such as an air conditioner to inform the user to handle it timely, thereby increasing intelligent level of the household appliance, extending the product function, and improving the user experience. Moreover, broadcasting a status of the household appliance can be realized via a local area network and a server simultaneously, and thus ensuring reliability of broadcasting the status of the household appliance by redundancy computation. In addition, an assigned bit of the state machine is suspended or reset, thus avoiding repeatedly broadcasting of the status broadcast instruction for the same status change.

Based on the above embodiments, further, the method for broadcasting a status of a household appliance will be described as follows with respect to the server side.

Figure 2 is a flow chart showing another method for broadcasting a status of a household appliance provided in embodiments of the present invention. As shown in Figure 2, the method includes: step 201 to 203.

At step 201, the status change information transmitted by the household appliance is acquired.

The method for broadcasting a status of a household appliance in embodiments of the present invention may be applied to a server.

In embodiments of the present invention, the household appliance may transmit its status change information to the server. For example, the humidifier when lacking water transmits its water lacking status to the server, such that the server generates a corresponding status broadcast instruction according to the status change information.

In some embodiments of the present invention, the user may set the broadcast configuration information by a control device and transmit to the server, and the server receives and stores the broadcast configuration information transmitted by the control device. The control device may be a smart phone or the like.

As an example, the broadcast configuration information may include an appliance identifier and status information, and may further include a broadcast time, broadcast volume, etc. The appliance identifier is configured to identify whether a household appliance is the household appliance which needs to be broadcasted. The status information is configured to determine whether a status corresponding to the status change information is the status which needs to be broadcasted. The broadcast time is configured to determine whether a current time meets the time period in which broadcast is needed.

Optionally, the server may further convert the broadcast configuration information to be in a protocol data type and transmit to the target household appliance, so as to allow the target household appliance to store the broadcast configuration information in the protocol data type. Therefore, broadcast control information adopts protocol data, and the accessible device has a good expansibility.

At step 202, it is judged whether the status change information meets a broadcast condition that is preset according to the broadcast configuration information that is pre-stored, and the corresponding status broadcast instruction is generated if the broadcast condition is met.

In an embodiment of the present invention, the server may receive the status change information, judge whether the status change information meets the broadcast condition that is preset according to the pre-stored broadcast configuration information, and generate the corresponding status broadcast instruction if the broadcast condition is met.

As an example, taking the broadcast configuration information including the appliance identifier, the status information and the broadcast time as an example, the server may acquire an appliance identifier of the household appliance corresponding to the status change information, judge whether an appliance identifier of the household appliance matches the appliance identifier in the configuration information; if yes, judge whether the status change information matches the status information in the configuration information; if no, do not generate the status broadcast instruction; if yes, judge whether a current time meets the broadcast time; if no, do not generate the status broadcast instruction; if yes, generate the corresponding status broadcast instruction; if no, do not generate the status broadcast instruction.

At step 203, the target household appliance is controlled to broadcast the corresponding status of the household appliance according to the status broadcast instruction.

In an embodiment of the present invention, the server may transmit the status broadcast instruction to each target household appliance, so as to allow the target household appliance to broadcast the corresponding status of the household appliance according to the status broadcast instruction. The status broadcast instruction may be the Json data, and the target household appliance may be a household appliance with a voice broadcast function, for example, may be an air conditioner, a refrigerator, a smoke stove and other household appliances with the voice broadcast function.

In an embodiment of the present invention, the server may further determine a target household appliance identifier of the target household appliance; and then transmit the status broadcast instruction to the target household appliance according to the target household appliance identifier, so as to allow the target household appliance to broadcast the corresponding status of the household appliance according to the status broadcast instruction. Therefore, it is possible to determine one or more appliances that need to broadcast when there are multiple target household appliances, thus avoiding an appliance that does not need to broadcast from broadcasting, thereby improving the user experience.

In some embodiments of the present invention, the server may further receive the status information transmitted by the household appliance, then judge whether the status of the household appliance is changed according to the received status information, and if yes, generate the corresponding status broadcast instruction. The status information may be transmitted by the household appliance at the preset time, or when the status of the household appliance is changed.

For example, the household appliance transmits its current status change information to the server at an interval of duration t, and the server receives the status information transmitted by the household appliance and judges whether the status of the household appliance is changed. When receiving status information currently being different from the status information received last time, the server judges that the status of the household appliance is changed, then generates the corresponding status broadcast instruction according to the status change; and does not generate the status broadcast instruction if the status information is same.

According to the method for broadcasting a status of a household appliance in embodiments of the present invention, the server acquires the status change information transmitted by the household appliance, then judges whether the status change information meets a broadcast condition that is preset according to the broadcast configuration information that is pre-stored, generates a corresponding status broadcast instruction if the broadcast condition is met; and further controls the target household appliance to broadcast the corresponding status of the household appliance according to the status broadcast instruction, thus achieving that the server controls an appliance, such as an air conditioner, to broadcast the status of the household appliance, to inform the user to handle it timely, thereby extending the product function and improving the user experience. In addition, broadcast control information of the target household appliance adopts protocol data, and the accessible device has a good expansibility.

Reference will be made below in combination with an actual application scenario.

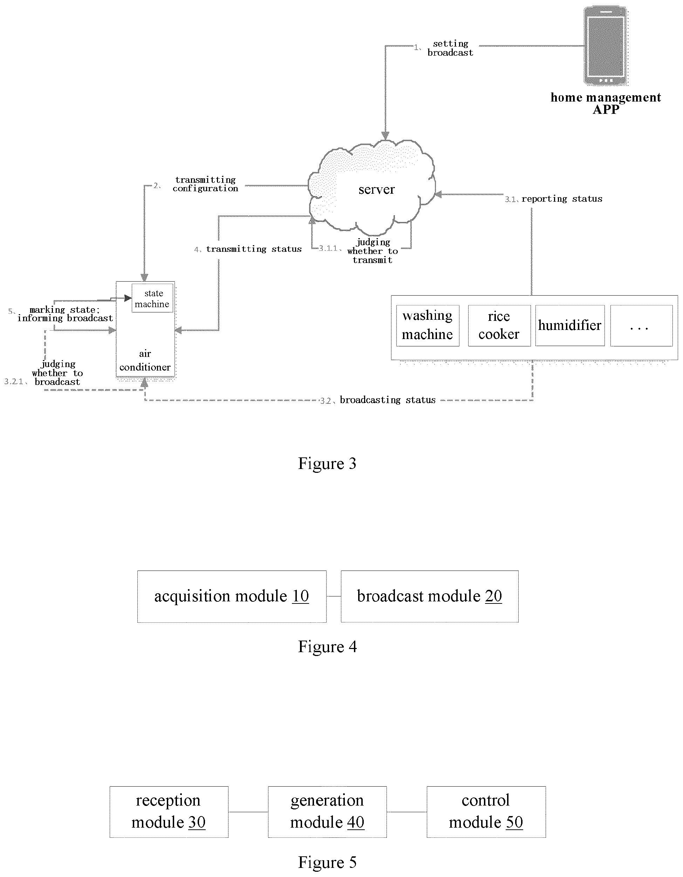

Figure 3 is a diagram showing an application scenario provided in embodiments of the present invention. With reference to Figure 3, the target household appliance is an air conditioner, and the household appliance includes a humidifier, a washing machine, and a rice cooker, etc.

At step 1, broadcast is set. A user sets the configuration information for broadcasting the status of the household appliance via a home management application, for example, the setting item may include: the household appliance, the status of which needs to be broadcasted; a specific status of the household appliance, such as a status of lacking water in a humidifier, a status of finishing rice cooking in a rice cooker, a status of finishing clothes washing in a washing machine, and other statuses of the household appliance that requires to be handled manually; a time period in which broadcast is allowed, such as 08:00 to 10:00, 12:00 to 14:00 or 15:00 to 19:00, which may be set by the user; a broadcast volume, and etc. After setting the broadcast configuration information in the home management application, the user transmits the configuration information to a cloud server.

At step 2, the configuration is transmitted. The server receives and stores the configuration information, converts the configuration information into the protocol data and transmits to the air conditioner. After receiving the protocol data of the configuration information transmitted by the server, the air conditioner stores the data in the wifi module, the electronic control module or another data storing module.

At step 3.1, a status is reported. When a status of another appliance in home is changed, this appliance reports its status change information to the server.

At step 3.1.1, it is judged whether to transmit. The server receives the status change information of the household appliance and judges whether the status change information meets a broadcast setting requirement according to the stored configuration information.

At step 3.2, the status is broadcasted. When reporting the status change information to the server, this appliance in home further reports its status change information via the local area network.

At step 3.2.1, it is judged whether to broadcast. When the air conditioner receives the status change information reported by another appliance, the air conditioner judges whether the broadcast condition is met according to the protocol data of the configuration information transmitted by the server, and if yes, the air conditioner generates the status broadcast instruction.

At step 4, the status is transmitted. The server transmits a status broadcast instruction which meets the broadcast setting requirement to the air conditioner.

At step 5, when receiving the status broadcast instruction transmitted by the server, or judging that the status change information meets the broadcast setting requirement and generating the status broadcast instruction, the air conditioner suspends the specified bit of the state machine and broadcasts the status. After the specified bit of the state machine is suspended, the next status broadcast instruction will be ignored. In addition, after the user handles the household appliance accordingly, the state machine of the air conditioner will be informed to reset the corresponding specified bit of the state machine, so as to proceed with the status broadcast, where the data link process of the reset is the same as the data link process of information broadcast, thus achieving broadcasting the status of the household appliance by an appliance such as the air conditioner, to inform the user to handle it timely, thereby extending the product function and improving the user experience. Moreover, broadcasting a status of the household appliance is realized via the local area network and the server simultaneously, and thus ensuring reliability of broadcasting the status of the household appliance by redundancy computation. In addition, an assigned bit of the state machine is suspended or reset, thus avoiding repeatedly broadcasting of the status broadcast instruction for the same status change.

For achieving the above embodiments, the present invention provides an apparatus for broadcasting a status of a household appliance.

Figure 4 is a block diagram showing an apparatus for broadcasting a status of a household appliance provided in embodiments of the present invention. As shown in Figure 4, the apparatus includes: an acquisition module 10 and a broadcast module 20.

The acquisition module 10 is configured to receive a status broadcast instruction, where the status broadcast instruction is generated according to a broadcast configuration information that is preset and a status change information of the household appliance.

The broadcast module 20 is configured to broadcast a corresponding status of the household appliance according to the status broadcast instruction.

Additionally, the acquisition module 10 is specifically configured to: receive the status broadcast instruction transmitted by a server.

Additionally, the acquisition module 10 is specifically configured to: receive the status change information transmitted by the household appliance via a local area network; judge whether the status change information meets a broadcast condition that is preset according to the broadcast configuration information that is pre-stored, and generate a corresponding status broadcast instruction if the broadcast condition is met.

Additionally, the apparatus further includes: a storing module, configured to: receive the broadcast configuration information transmitted by the server; and store the broadcast configuration information in a communication module, and/or store the broadcast configuration information in an electronic control module.

Optionally, the broadcast configuration information includes an appliance identifier, status information corresponding to the appliance identifier, and a broadcast time. The acquisition module 10 is specifically configured to: judge whether an appliance identifier of the household appliance matches the appliance identifier in the broadcast configuration information; if yes, judge whether the status change information matches the status information in the broadcast configuration information; if yes, judge whether a current time meets the broadcast time; and if yes, generate the corresponding status broadcast instruction.

Optionally, the apparatus further includes: a processing module, configured to set a target bit of a state machine to a suspended state according to the status broadcast instruction.

Optionally, the processing module is further configured to judge whether the status broadcast instruction currently acquired corresponds to the target bit, and if yes, not to broadcast the corresponding status of the household appliance.

Optionally, the processing module is further configured to: receive a reset instruction for the target bit of the state machine, and control the target bit to reset.

It should be noted that, the explanation on the method for broadcasting a status of a household appliance in the above embodiments, is also applicable to the apparatus for broadcasting a status of a household appliance in embodiments of the present invention, and will not be repeated here.

According to the apparatus for broadcasting a status of a household appliance in embodiments of the present invention, a target household appliance receives a status broadcast instruction by, where the status broadcast instruction is generated according to a broadcast configuration information that is preset and a status change information of the household appliance; then broadcasts a corresponding status of the household appliance according to the status broadcast instruction, thus achieving broadcasting the status of the household appliance, by an appliance such as the air conditioner, to inform the user to handle it timely, thereby extending the product function and improving the user experience. Moreover, broadcasting a status of the household appliance can be realized via a local area network and a server simultaneously, and thus ensuring reliability of broadcasting the status of the household appliance by redundancy computation. In addition, an assigned bit of the state machine is suspended or reset, thus avoiding repeatedly broadcasting of the status broadcast instruction for the same status change.

Figure 5 is a block diagram showing another apparatus for broadcasting a status of a household appliance provided in embodiments of the present invention. As shown in Figure 5, the apparatus includes: a reception module 30, a generation module 40, and a control module 50.

The reception module 30 is configured to acquire status change information transmitted by the household appliance.

The generation module 40 is configured to judge whether the status change information meets a broadcast condition that is preset according to the broadcast configuration information that is pre-stored, and generate a corresponding status broadcast instruction if the broadcast condition is met

The control module 50 is configured to control a target household appliance to broadcast a corresponding status of the household appliance according to the status broadcast instruction.

Optionally, the reception module 30 is further configured to: acquire status information transmitted by the household appliance, where the status information is transmitted by the household appliance at a preset time, and/or when a status of the household appliance is changed.

The generation module 40 is further configured to: judge whether the status is changed according to the status information, and if yes, generate the corresponding status broadcast instruction.

Optionally, the control module 50 is specifically configured to: determine a target household appliance identifier of the target household appliance; and transmit the status broadcast instruction to the target household appliance according to the target household appliance identifier, so as to allow the target household appliance to broadcast the corresponding status of the household appliance according to the status broadcast instruction.

Optionally, the apparatus further includes: a configuration module, configured to receive and store the broadcast configuration information transmitted by a control device; convert the broadcast configuration information to be in a protocol data type and transmit to the target household appliance, so as to allow the target household appliance to store the broadcast configuration information in the protocol data type.

Optionally, the broadcast configuration information includes an appliance identifier, status information corresponding to the appliance identifier, and a broadcast time, where the generation module 40 is specifically configured to: judge whether an appliance identifier of the household appliance matches the appliance identifier in the broadcast configuration information; if yes, judge whether the status change information matches the status information in the broadcast configuration information; if yes, judge whether a current time meets the broadcast time; and if yes, generate the corresponding status broadcast instruction.

It should be noted that, the explanation on the method for broadcasting a status of a household appliance in the above embodiments, is also applicable to the apparatus for broadcasting a status of a household appliance in embodiments of the present application, and will not be repeated here.

According to the apparatus for broadcasting a status of a household appliance in embodiments of the present invention, a server acquires status change information transmitted by the household appliance, then judges whether the status change information meets a broadcast condition that is preset according to the broadcast configuration information that is pre-stored, generates a corresponding status broadcast instruction if the broadcast condition is met, and further controls a target household appliance to broadcast a corresponding status of the household appliance according to the status broadcast instruction, thus achieving that the server controls an appliance, such as an air conditioner, to broadcast the status of the household appliance, and thus informing the user to handle it timely, thereby extending the product function and improving the user experience. In addition, broadcast control information of the target household appliance adopts protocol data, and the accessible device has a good expansibility.

For achieving the above embodiments, the present invention provides an air conditioner appliance, including: an appliance body; and an apparatus for broadcasting a status of a household appliance as defined in independent claim 6.

For achieving the above embodiments, the present invention provides a household appliance comprising a memory and a processor as defined in independent claim 7.

For achieving the above embodiments, it is provided a computer program product, wherein an instruction in the computer program product when executed by a processor, implements a method for broadcasting a status of a household appliance as described in the above embodiments.

For achieving the above embodiments, the present invention provides a computer-readable storage medium as defined in independent claim 8.

**In** the specification, it should be understood that terms such as "first" and "second" are used herein for purposes of description and are not intended to indicate or imply relative importance or significance or impliedly indicate quantity of the technical feature referred to. Thus, the feature associated with "first" and "second" may comprise one or more of such feature. In the description of the present invention, "a plurality of" means two or more than two, such as two, three, etc., unless specified otherwise.

Although explanatory embodiments have been shown and described, it would be appreciated that the above embodiments are illustrative and should not be construed as limiting the present invention, and those of ordinary skills in the art can make changes, alternatives, and modifications to the embodiments in the scope of the present invention.

## Claims

1. A method for broadcasting a status of a first household appliance, wherein the method is performed by a second household appliance, the method comprises:
receiving (2), at the second household appliance, broadcast configuration information transmitted by a server;
storing, at the second household appliance, the broadcast configuration information in a communication module, and/or storing the broadcast configuration information in an electronic control module;
receiving (3.2), at the second household appliance, the status change information transmitted by the first household appliance via a local area network;
judging (3.2.1) whether the status change information meets a broadcast condition that is preset according to the broadcast configuration information that is pre-stored; generating a corresponding status broadcast instruction if the status change information meets the broadcast condition;
further receiving (4) a status broadcast instruction from the server; and
after judging that the status change information meets the broadcast condition and generating a status broadcast instruction or after receiving the status broadcast instruction transmitted by the server: broadcasting (5), from the second household appliance, the status of the first household appliance according to the status change information, according to the status broadcast instruction.

2. The method according to claim 1, wherein the broadcast configuration information comprises an appliance identifier, a status information corresponding to the appliance identifier, and a broadcast time, wherein (202) judging whether the status change information meets a broadcast condition that is preset according to the broadcast configuration information that is pre-stored, and generating a corresponding status broadcast instruction if the broadcast condition is met comprise:
judging whether an appliance identifier of the household appliance matches the appliance identifier in the broadcast configuration information;
if yes, judging whether the status change information matches the status information in the broadcast configuration information;
if yes, judging whether a current time meets the broadcast time; and
if yes, generating the corresponding status broadcast instruction.

3. The method according to claim 1 or 2, wherein after (102) broadcasting a corresponding status of the first household appliance according to the status broadcast instruction, the method further comprises:
setting, at the second household appliance, a target bit of a state machine to a suspended state according to the status broadcast instruction;
wherein after setting the target bit of a state machine to a suspended state, the method further comprises:
judging, at the second household appliance, whether the status broadcast instruction currently acquired corresponds to the target bit, if yes, not to broadcast the corresponding status of the first household appliance; and/or,
wherein after setting the target bit of a state machine to a suspended state, the method further comprises:
receiving, at the second household appliance, a reset instruction for the target bit of the state machine, and controlling the target bit to reset.

4. An apparatus for broadcasting a status of a household appliance, comprising:
a storing module, configured to: receive broadcast configuration information transmitted by a server; and store the broadcast configuration information in a communication module, and/or store the broadcast configuration information in an electronic control module;
an acquisition module (10), configured to receive a status broadcast instruction transmitted by the server, wherein the status broadcast instruction has been generated according to the broadcast configuration information and a status change information of the household appliance,
wherein the acquisition module is configured to receive the status change information transmitted by the household appliance via a local area network;
judge whether the status change information meets a broadcast condition that is preset according to the broadcast configuration information that is pre-stored, and
generate a corresponding status broadcast instruction if the broadcast condition is met,
a broadcast module (20), configured to broadcast the status of the household appliance according to the status change information, according to the status broadcast instruction generated by the acquisition module (10) or the status broadcast instruction received from the server.

5. The apparatus according to claim 4, wherein the broadcast configuration information comprises an appliance identifier, a status information corresponding to the appliance identifier, and a broadcast time, wherein the generation module (40) is specifically configured to:
judge whether an appliance identifier of the first household appliance matches the appliance identifier in the broadcast configuration information;
if yes, judge whether the status change information matches the status information in the broadcast configuration information;
if yes, judge whether a current time meets the broadcast time; and
if yes, generate the corresponding status broadcast instruction.

6. An air conditioner appliance, comprising:
an appliance body; and
an apparatus for broadcasting a status of a household appliance according to claim 4.

7. A household appliance, comprising:
a memory; and
a processor,
wherein the memory stores instructions, which, when executed by the processor, cause the household appliance to execute the steps of the method for broadcasting a status of a second household appliance according to any one of claims 1 to 3.

8. A computer-readable storage medium having stored therein a computer program comprising instructions that cause a household appliance to execute the steps of the method for broadcasting a status of a second household appliance according to any one of claims 1 to 3.

## Patentansprüche

1. Verfahren zum Übertragen eines Status eines ersten Haushaltsgeräts, wobei das Verfahren von einem zweiten Haushaltsgerät ausgeführt wird und das Verfahren Folgendes umfasst:
Empfangen (2) von durch einen Server gesendeten Übertragungskonfigurationsinformationen am zweiten Haushaltsgerät;
Speichern der Übertragungskonfigurationsinformationen in einem Kommunikationsmodul am zweiten Haushaltsgerät und/oder Speichern der Übertragungskonfigurationsinformationen in einem elektronischen Steuermodul;
Empfangen (3.2) der vom ersten Haushaltsgerät über ein lokales Netzwerk gesendeten Statusänderungsinformationen am zweiten Haushaltsgerät;
Beurteilen (3.2.1), ob die Statusänderungsinformationen eine Übertragungsbedingung erfüllen, die gemäß den vorab gespeicherten Übertragungskonfigurationsinformationen voreingestellt ist;
Erzeugen eines entsprechenden Statusübertragungsbefehls, wenn die Statusänderungsinformationen die Übertragungsbedingung erfüllen;
ferner Empfangen (4) eines Statusübertragungsbefehls vom Server; und
nach dem Beurteilen, dass die Statusänderungsinformationen die Übertragungsbedingung erfüllen, und dem Erzeugen eines Statusübertragungsbefehls oder nach dem Empfangen des vom Server gesendeten Statusübertragungsbefehls:
Übertragen (5) des Status des ersten Haushaltsgeräts vom zweiten Haushaltsgerät gemäß den Statusänderungsinformationen gemäß dem Statusübertragungsbefehl.

2. Verfahren gemäß Anspruch 1, wobei die Übertragungskonfigurationsinformationen eine Gerätekennung, eine der Gerätekennung entsprechende Statusinformation und eine Übertragungszeit umfassen, wobei (202) das Beurteilen, ob die Statusänderungsinformationen eine Übertragungsbedingung erfüllen, die gemäß den vorab gespeicherten Übertragungskonfigurationsinformationen voreingestellt ist, und das Erzeugen eines entsprechenden Statusübertragungsbefehls, falls die Übertragungsbedingung erfüllt ist, Folgendes umfassen:
Beurteilen, ob eine Gerätekennung des Haushaltsgeräts mit der Gerätekennung in den Übertragungskonfigurationsinformationen übereinstimmt;
falls ja, Beurteilen, ob die Statusänderungsinformation mit der Statusinformation in den Übertragungskonfigurationsinformationen übereinstimmt;
falls ja, Beurteilen, ob eine aktuelle Zeit mit der Übertragungszeit übereinstimmt; und
falls ja, Erzeugen des entsprechenden Statusübertragungsbefehls.

3. Verfahren nach Anspruch 1 oder 2, wobei das Verfahren nach dem (102) Übertragen eines entsprechenden Status des ersten Haushaltsgeräts gemäß dem Statusübertragungsbefehl ferner Folgendes umfasst:
Setzen eines Zielbits einer Zustandsmaschine am zweiten Haushaltsgerät auf einen angehaltenen Zustand gemäß dem Statusübertragungsbefehl;
wobei das Verfahren nach dem Setzen des Zielbits einer Zustandsmaschine auf einen angehaltenen Zustand ferner Folgendes umfasst:
Beurteilen am zweiten Haushaltsgerät, ob der aktuell erfasste Statusübertragungsbefehl dem Zielbit entspricht; falls ja, Unterlassen der Übertragung des entsprechenden Status des ersten Haushaltsgeräts; und/oder,
wobei das Verfahren nach dem Setzen des Zielbits einer Zustandsmaschine auf einen angehaltenen Zustand ferner Folgendes umfasst:
Empfangen eines Rücksetzbefehls für das Zielbit der Zustandsmaschine am zweiten Haushaltsgerät und Ansteuern des Zielbits, um es zurückzusetzen.

4. Apparat zum Übertragen eines Status eines Haushaltsgeräts, umfassend:
ein Speichermodul, das so konfiguriert ist, dass es: von einem Server übertragene Übertragungskonfigurationsinformationen empfängt; und die Übertragungskonfigurationsinformationen in einem Kommunikationsmodul speichert und/oder die Übertragungskonfigurationsinformationen in einem elektronischen Steuermodul speichert;
ein Erfassungsmodul (10), das so konfiguriert ist, dass es einen vom Server übertragenen Statusübertragungsbefehl empfängt, wobei der Statusübertragungsbefehl gemäß den Übertragungskonfigurationsinformationen und einer Statusänderungsinformation des Haushaltsgeräts erzeugt wurde,
wobei das Erfassungsmodul so konfiguriert ist, dass es
die vom Haushaltsgerät über ein lokales Netzwerk gesendeten Statusänderungsinformationen empfängt;
beurteilt, ob die Statusänderungsinformationen eine Übertragungsbedingung erfüllen, die gemäß den vorab gespeicherten Übertragungskonfigurationsinformationen voreingestellt ist, und
einen entsprechenden Statusübertragungsbefehl erzeugt, wenn die Übertragungsbedingung erfüllt ist,
ein Übertragungsmodul (20), das so konfiguriert ist, dass es den Status des Haushaltsgeräts gemäß den Statusänderungsinformationen entsprechend dem vom Erfassungsmodul (10) erzeugten Statusübertragungsbefehl oder dem vom Server empfangenen Statusübertragungsbefehl überträgt.

5. Apparat gemäß Anspruch 4, wobei die Übertragungskonfigurationsinformationen eine Gerätekennung, eine der Gerätekennung entsprechende Statusinformation und eine Übertragungszeit umfassen, wobei das Erzeugungsmodul (40) speziell dafür konfiguriert ist, dass es:
prüft, ob eine Gerätekennung des ersten Haushaltsgeräts mit der Gerätekennung in den Übertragungskonfigurationsinformationen übereinstimmt;
falls ja, beurteilt, ob die Statusänderungsinformationen mit den Statusinformationen in den Übertragungskonfigurationsinformationen übereinstimmen;
falls ja, beurteilt, ob eine aktuelle Zeit mit der Übertragungszeit übereinstimmt; und
falls ja, den entsprechenden Statusübertragungsbefehl erzeugt.

6. Klimaanlagengerät, umfassend:
einen Gerätekörper; und
einen Apparat zum Übertragen eines Status eines Haushaltsgeräts gemäß Anspruch 4.

7. Haushaltsgerät, umfassend:
einen Speicher; und
einen Prozessor,
wobei der Speicher Befehle speichert, die, wenn sie vom Prozessor ausgeführt werden, bewirken, dass das Haushaltsgerät die Schritte des Verfahrens zum Übertragen eines Status eines zweiten Haushaltsgeräts gemäß einem der Ansprüche 1 bis 3 ausführt.

8. Computerlesbares Speichermedium, aufweisend ein darauf gespeichertes Computerprogramm, das Befehle umfasst, die ein Haushaltsgerät veranlassen, die Schritte des Verfahrens zum Übertragen eines Status eines zweiten Haushaltsgeräts gemäß einem der Ansprüche 1 bis 3 auszuführen.

## Revendications

1. Procédé de diffusion d'un état d'un premier appareil électroménager, dans lequel le procédé est mis en œuvre par un second appareil électroménager, le procédé comprend :
recevoir (2), au niveau du second appareil électroménager, une information de configuration de diffusion transmise par un serveur ;
stocker, au niveau du second appareil électroménager, l'information de configuration de diffusion dans un module de communication, et/ou stocker l'information de configuration de diffusion dans un module de commande électronique ;
recevoir (3.2), au niveau du second appareil électroménager, l'information de changement d'état transmise par le premier appareil électroménager via un réseau local
;
déterminer (3.2.1) si l'information de changement d'état satisfait à une condition de diffusion qui est prédéfinie selon l'information de configuration de diffusion qui est préalablement stockée ;
générer une instruction de diffusion d'état correspondante si l'information de changement d'état satisfait à la condition de diffusion ;
recevoir en outre (4) une instruction de diffusion d'état provenant du serveur ; et
après avoir déterminé que l'information de changement d'état satisfait à la condition de diffusion et avoir généré une instruction de diffusion d'état ou après avoir reçu l'instruction de diffusion d'état transmise par le serveur :
diffuser (5), à partir du second appareil électroménager, l'état du premier appareil électroménager selon l'information de changement d'état, selon l'instruction de diffusion d'état.

2. Procédé selon la revendication 1, dans lequel l'information de configuration de diffusion comprend un identifiant d'appareil, une information d'état correspondant à l'identifiant d'appareil et une heure de diffusion, dans lequel le fait de déterminer (202) si l'information de changement d'état satisfait à une condition de diffusion qui est prédéfinie selon l'information de configuration de diffusion qui est préalablement stockée, et de générer une instruction de diffusion d'état correspondante si la condition de diffusion est satisfaite, comprend :
déterminer si un identifiant d'appareil de l'appareil électroménager correspond à l'identifiant d'appareil dans l'information de configuration de diffusion ;
dans l'affirmative, déterminer si l'information de changement d'état correspond à l'information d'état dans l'information de configuration de diffusion ;
dans l'affirmative, déterminer si l'heure actuelle correspond à l'heure de diffusion ; et
dans l'affirmative, générer l'instruction de diffusion d'état correspondante.

3. Procédé selon la revendication 1 ou 2, dans lequel, après la diffusion (102) d'un état correspondant du premier appareil électroménager selon l'instruction de diffusion d'état, le procédé comprend en outre :
mettre, au niveau du second appareil électroménager, un bit cible d'une machine à états dans un état suspendu selon l'instruction de diffusion d'état ;
dans lequel, après avoir mis le bit cible d'une machine à états dans un état suspendu, le procédé comprend en outre :
déterminer, au niveau du second appareil électroménager, si l'instruction de diffusion d'état actuellement acquise correspond au bit cible et, dans l'affirmative, ne pas diffuser l'état correspondant du premier appareil électroménager ; et/ou,
dans lequel, après avoir mis le bit cible d'une machine à états dans un état suspendu, le procédé comprend en outre :
recevoir, au niveau du second appareil électroménager, une instruction de réinitialisation pour le bit cible de la machine à états, et commander la réinitialisation du bit cible.

4. Dispositif de diffusion d'un état d'un appareil électroménager, comprenant :
un module de stockage, configuré pour : recevoir une information de configuration de diffusion transmise par un serveur ; et stocker l'information de configuration de diffusion dans un module de communication, et/ou stocker l'information de configuration de diffusion dans un module de commande électronique ;
un module d'acquisition (10), configuré pour recevoir une instruction de diffusion d'état transmise par le serveur, dans lequel l'instruction de diffusion d'état a été générée selon l'information de configuration de diffusion et une information de changement d'état de l'appareil électroménager,
dans lequel le module d'acquisition est configuré pour
recevoir l'information de changement d'état transmise par l'appareil électroménager via un réseau local ;
déterminer si l'information de changement d'état satisfait à une condition de diffusion qui est prédéfinie selon l'information de configuration de diffusion qui est préalablement stockée, et
générer une instruction de diffusion d'état correspondante si la condition de diffusion est satisfaite,
un module de diffusion (20), configuré pour diffuser l'état de l'appareil électroménager selon l'information de changement d'état, selon l'instruction de diffusion d'état générée par le module d'acquisition (10) ou l'instruction de diffusion d'état reçue du serveur.

5. Dispositif selon la revendication 4, dans lequel l'information de configuration de diffusion comprend un identifiant d'appareil, une information d'état correspondant à l'identifiant d'appareil et une heure de diffusion, dans lequel le module de génération (40) est spécifiquement configuré pour :
déterminer si un identifiant d'appareil du premier appareil électroménager correspond à l'identifiant d'appareil dans l'information de configuration de diffusion ;
dans l'affirmative, déterminer si l'information de changement d'état correspond à l'information d'état dans l'information de configuration de diffusion ;
dans l'affirmative, déterminer si l'heure actuelle correspond à l'heure de diffusion ; et
dans l'affirmative, générer l'instruction de diffusion d'état correspondante.

6. Appareil de climatisation, comprenant :
un corps d'appareil ; et
un dispositif de diffusion d'un état d'un appareil électroménager selon la revendication 4.

7. Appareil électroménager, comprenant :
une mémoire ; et
un processeur,
dans lequel la mémoire stocke des instructions qui, lorsqu'elles sont exécutées par le processeur, amènent l'appareil électroménager à exécuter les étapes du procédé de diffusion d'un état d'un second appareil électroménager selon l'une quelconque des revendications 1 à 3.

8. Support de stockage lisible par ordinateur dans lequel est stocké un programme informatique comprenant des instructions qui amènent un appareil électroménager à exécuter les étapes du procédé de diffusion d'un état d'un second appareil électroménager selon l'une quelconque des revendications 1 à 3.
